(19) Europäisches Patentamt

European Patent Office

Office européen des brevets

(11) **EP 0 591 587 B1**

## (12) EUROPEAN PATENT SPECIFICATION

(45) Date of publication and mention
of the grant of the patent:
**25.03.1998 Bulletin 1998/13**

(51) Int Cl.⁶: **F16C 19/18**, F16C 25/06

(21) Application number: **92311850.9**

(22) Date of filing: **30.12.1992**

(54) **Double-row ball bearing**

Doppelreihiges Kugellager

Palier à deux rangées de billes

(84) Designated Contracting States:
**DE FR GB IT**

(30) Priority: **06.10.1992 JP 292126/92**

(43) Date of publication of application:
**13.04.1994 Bulletin 1994/15**

(60) Divisional application: **97106069.4 / 0 786 604**

(73) Proprietor: **MINEBEA KABUSHIKI-KAISHA
Kitasaku-gun, Nagano-ken (JP)**

(72) Inventors:
• **Obara, Rikuro, c/o Minebea Kabushiki Kaisha
Nagano-ken (JP)**

• **Tatsuno, Katashi, c/o Minebea Kabushiki Kaisha
Nagano-ken (JP)**

(74) Representative:
**Murgatroyd, Susan Elizabeth et al
Baron & Warren
18 South End
Kensington
London W8 5BU (GB)**

(56) References cited:
**EP-A- 0 289 898         DE-A- 3 101 596
GB-A- 2 185 790         GB-A- 2 193 539
US-A- 3 167 364**

## Description

The present invention relates to a double-row ball bearing which is particularly adaptable to office automation instruments.

In ball bearings, there is a so-called "direct type of ball bearing" in which a ball race is directly formed in an outer peripheral surface of an axle.

In such a direct type of ball bearing, in case that the ball bearing has a single row of balls only, it is very easy to have the ball aligned with each of an axle ball race (which is formed in an outer peripheral surface of the axle) and an outer-ring ball race (which is formed in an inner peripheral surface of an outer ring). In contrast with this, in case that the ball bearing has a pair of rows of balls, i.e. in case that the ball bearing is of a double-row type, it is very difficult to have the balls and the races aligned.

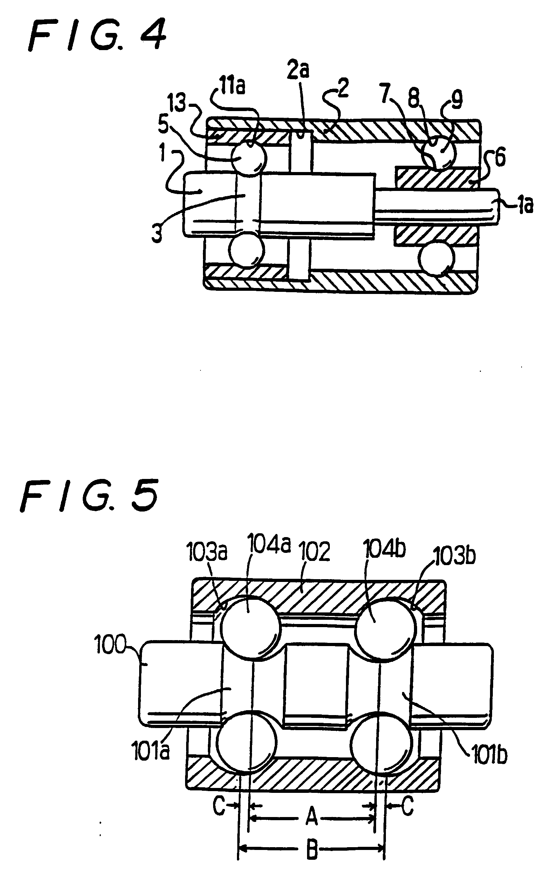

This will be described with reference to Fig. 4 which shows a conventional double-row ball bearing in which: a pair of axle ball races 101a, 101b are formed in an outer peripheral surface of an axle 100 so as to extend circumferentially; a pair of outer-ring ball races 103a, 103b are formed in an inner surface of an outer ring 102; a plurality of balls 104a and 104b are disposed between the axle ball race 101a and the outer-ring ball race 103a and between the axle ball race 101b and the outer ring ball race 103b respectively.

In the double-row ball bearing having the above construction the following equation must be satisfied:

$$B > A \text{ or } A > B$$

where: "A" denotes the distance between center lines of the axle ball races 101a, 101b; and "B" denotes the distance between center lines of the outer-ring ball races 103a, 103b.

In case that "B" is too much larger that "A" or "A" is too much larger than "B" excessive loads are applied to the balls and the races which are thereby deformed so that the ball bearing is damaged.

In the conventional double-row ball bearing, a pair of outer-ring ball races 103a and 103b are previously formed in the inner peripheral surface of the outer ring 102 so as to correspond to the pair of axle ball races 101a and 101b of the axle 1, respectively.

Consequently, such outer-ring ball races 103a, 103b must be formed so as to precisely correspond to the axle ball races 101a, 101b. Further, in assembling of the outer ring 102 with the axle 100, it is necessary to keep the pre-load at a proper value, which requires the assembling work to be conducted in an extremely precise manner. In addition, once the bearing is assembled, the thus assembled bearing cannot be adjusted later.

German Patent 3101596, on which the pre-characterising part of claim 1 is based, discloses a double-row ball bearing in which a simple non-stepped shaft is supported for rotation within a sleeve by means of two rows of balls. The first row of balls runs between an inner race formed in a surface of the shaft and an outer race formed in an inner surface of the sleeve. The second row of balls runs between an inner race formed in a surface of the shaft and an outer race formed in an inner surface of a ring to which a pre-load is applied by a resilient member or an external force. The ring is fixed in position in the sleeve by adhesive inserted through holes in the sleeve. Similar double-row ball bearings are described in GB Patent 2193539 and US Patent 3167364.

It is an object of the present invention to provide a double-row ball bearing which; allows a pre-load to be easily applied to an inner ring (which is mounted on an axle) or to an outer ring (which is mounted in a sleeve); enables the pre-load to be precisely applied; is excellent in rigidity; is improved in so-called "raceway run-out with side"; is excellent in properties resistant to vibration; is easily assembled which reduces the manufacturing costs of the double-row ball bearings of the present invention.

The above object of the present invention is accomplished by providing a double-row ball bearing as set out in claim 1.

A pre-load is applied to one of an inner ring which is mounted on the axle and an outer ring which is mounted on a sleeve and the inner ring is fixed to the axle or the outer ring is fixed to the sleeve, in a condition in which the pre-load is applied suitably.

The invention will now be described by way of example with reference to the accompanying Figures in which:

Fig. 1 is a longitudinal sectional view of a first embodiment of the double-row ball bearing of the present invention;

Fig. 2 is a longitudinal sectional view of a second embodiment of the double-row ball bearing of the present invention;

Fig. 3 is a longitudinal sectional view of a third embodiment of the double-row ball bearing of the present invention;

Fig. 4 is a longitudinal sectional view of a fourth embodiment of the double-row ball bearing of the present invention;

Fig. 5 is a longitudinal sectional view of a prior art double-row ball bearing.

All the embodiments of the present invention are double-row ball bearings each of which is provided with an axle and a sleeve which forms an outer ring corresponding to the axle.

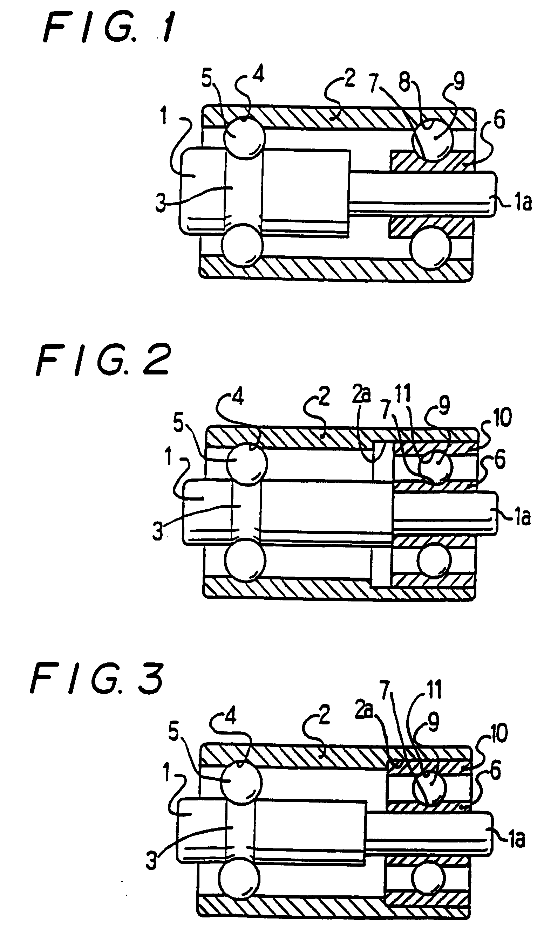

In a first embodiment of a double-row ball bearing of the present invention shown in Fig. 1, an axle ball race 3 and an outer-ring ball race 4 are formed in an outer peripheral surface of the axle 1 and an inner peripheral surface of the sleeve 2, respectively. A plurality of balls 5 are disposed between these ball races 3 and 4. An inner ring 6 is fixedly mounted on the axle 1. The inner ring is not angular type, but short straight tube type. An inner-ring ball race 7 and another outer-ring ball race 8 are formed in an outer peripheral surface of the inner ring 6 and the inner peripheral surface of the sleeve 2, respectively. A plurality of balls 9 are disposed between these ball races 7 and 8.

The axle 1 is of the shoulder type provided with a small-diameter axle portion la on which the inner ring 6 is fixedly mounted.

In manufacturing of the double-row ball bearing having the above construction, the inner ring 6 is slidably mounted on the axle 1 so as to be axially movable along the axle 1. Then, the thus mounted inner ring 6 is subjected to a pre-load applied to the right face of the inner ring 6 as viewed in Fig. 1 so that the inner ring 6 is slightly moved. After the pre-load is applied the inner ring 6 is fixed to the axle 1 with a suitable adhesive agent or the like.

A method for applying the pre-load to the inner ring 6 of the double-row ball bearing of the present invention can be any one of the following methods: using a weight; using a spring; using shims; using spacers; and using screws.

In each of the second and third embodiments of the double-row ball bearings of the present invention shown in Figs. 2 and 3, respectively: the axle 1 is of the shoulder type provided with a small-diameter portion la; the sleeve 2 is of the shoulder type provided with the large-diameter portion 2a; and, a ball bearing having the balls is interposed between the small-diameter portion la of the axle 1 and the large-diameter portion 2a of the sleeve 2. Both of the inner ring 6 and the outer ring 10 of the ball bearing are not of the angular type, but of the short straight tube type.

In manufacturing of the double-row ball bearing shown in Fig. 2, the outer ring 10 is slidably mounted in the sleeve 2. Then, a pre-load is applied to the thus mounted outer ring 10. Under such circumstances, the outer ring 10 is fixed to the sleeve with a suitable adhesive agent or the like.

In manufacturing of the double-row ball bearing shown in Fig. 3, the inner ring 6 is slidably mounted on the small-diameter portion la of the axle 1. Then, a pre-load is applied to the thus mounted inner ring 6. After that, the inner ring 6 is fixed to the small-diameter portion la of the axle 1 with a suitable adhesive agent.

Fig. 4 shows a fourth embodiment of the double-row ball bearing of the present invention. This embodiment of the present invention has an outer ring 13 disposed at one of its its ends and the inner ring 6 disposed at the opposite end. The Fig. 4 embodiment uses a sleeve 2 of the shoulder type provided with a large-diameter portion 2a and an axle 1 of the shoulder type provided with the small-diameter portion la.

In manufacturing the double-row ball bearing shown in Fig. 4 the inner ring 6 and the outer ring 13 are slidably mounted on the axle 1 and in the sleeve 2, respectively; then a pre-load is applied to each of the thus mounted inner ring 6 and outer ring 13; and, thereafter, the inner ring 6 and the outer ring 13 are fixed to the axle 1 and the sleeve 2 with a suitable adhesive agent, respectively.

In manufacturing the double-row ball bearing of the present invention, since the inner ring (which is mounted on the axle) is axially slidable it is possible to easily apply a pre-load to the axially slidable ring. Consequently, it is possible to provide double-row ball bearings each of which is: excellent in rigidity; improved in so-called "raceway run-out with side"; and, excellent in properties resistant to vibration. In addition, each double-row ball bearing according to the present invention is easily assembled, which reduces manufacturing costs.

## Claims

1. A double-row ball bearing comprising:

   an axle (1);
   a sleeve (2) surrounding said axle (1);
   first (5) and second (9) sets of balls;
   a ring (6, 10) in the surface of which a race (7, 11) for said second set of balls (9) is formed;

   wherein said first set of balls (5) run between an axle race (3) formed in an outer surface of said axle and an outer ball race (4, 11a) associated with said sleeve (2); and

   a pre-load is applied to said ring which is then fixed so that said first and second set of balls are set at a suitable axial position;

   characterised in that:

   said axle race (3) is formed in an outer surface of a larger diameter portion of said axle (1); and either

   (i) said pre-loaded ring (6) is mounted on a relatively smaller diameter portion (1a) of said axle (1) so as to constitute an inner ring and has said race (7) for said second set of balls (9) formed in its outer surface; or
   (ii) said second set of balls (9) run between a further ring mounted on a relatively smaller diameter portion (1a) of said axle (1) and said race (11) of said pre-loaded ring (10) which is mounted in said sleeve (2).

2. The double-row ball bearing claimed in claim 1 wherein:

   said outer ball race (4) for said first set of balls and an outer ball race (8) for said second set of balls (9) are both directly formed in an inner surface of said sleeve (2).

**3.** The double-row ball bearing claimed in claim 1 wherein:

said outer ball race (4) for said first set of balls (5) is directly formed in an inner surface of said sleeve (2); and
an outer ball race (11) for said second set of balls (9) is formed in an inner surface of an outer ring (10) mounted in said sleeve (2).

**4.** The double-row ball bearing claimed in claim 1 wherein:

an outer ball race (8) for said second set of balls (9) is directly formed in an inner surface of said sleeve (2); and
said outer ball race (11a) for said first set of balls (5) is formed in an inner surface of an outer ring (13) mounted in said sleeve (2).

**Patentansprüche**

**1.** Doppelreihiges Kugellager, das folgendes umfasst:

eine Achse (1);
eine Hülse (2), die die Achse (1) umgibt;
erste (5) und zweite (9) Sätze von Kugeln;
einen Ring (6, 10), in dessen Oberfläche ein Laufring (7, 11) für den zweiten Satz von Kugeln (9) gebildet ist;
in dem der erste Satz von Kugeln (5) zwischen einem Achsenlaufring (3), der in einer äußeren Oberfläche der Achse gebildet ist und einem äußeren Kugellagerring (4, 11a), der der Hülse (2) zugeordnet ist, läuft; und
eine Vorlast auf den Ring angewandt wird, der dann befestigt wird, so dass der erste Satz von Kugeln und der zweite Satz von Kugeln an einer geeigneten axialen Stellung angebracht werden;

dadurch gekennzeichnet, dass:
der Achsenlaufring (3) in einer äußeren Oberfläche eines größeren Durchmesserteils der Achse (1) gebildet ist; und entweder

(i) der vorbelastete Ring (6) auf einem relativ kleineren Durchmesserteil (1a) der Achse angebracht ist, um einen inneren Ring zu bilden, und den Laufring (7) für den zweiten Satz von Kugeln (9) in seiner äußeren Oberfläche gebildet hat; oder
(ii) der zweite Satz von Kugeln (9) zwischen einem weiteren Ring, der auf einem relativ kleineren Durchmesserteil (1a) der Achse (1) und dem Laufring (11) des vorbelasteten Rings (10), der in der Hülse (2) angebracht ist, läuft.

**2.** Doppelreihiges Kugellager nach Anspruch 1, in dem:
der äußere Kugellagerring (4) für den ersten Satz von Kugeln und ein äußerer Kugellagerring (8) für den zweiten Satz von Kugeln (9) beide direkt in einer inneren Oberfläche der Hülse (2) gebildet sind.

**3.** Doppelreihiges Kugellager nach Anspruch 1, in dem:

der äußere Kugellagerring (4) für den ersten Satz von Kugeln (5) direkt in einer inneren Oberfläche der Hülse (2) gebildet ist; und
ein äußerer Kugellagerring (11) für den zweiten Satz von Kugeln (9) in einer inneren Oberfläche eines äußeren Rings gebildet ist, der in der Hülse (2) angebracht ist.

**4.** Doppelreihiges Kugellager nach Anspruch 1, in dem:

ein äußerer Kugellagerring (8) für den zweiten Satz von Kugeln (9) direkt in einer inneren Oberfläche der Hülse (2) gebildet ist; und
der äußere Kugellagerring (11a) für den ersten Satz von Kugeln (5) in einer inneren Oberfläche eines äußeren Rings (13) gebildet ist, der in der Hülse (2) angebracht ist.

**Revendications**

**1.** Roulement à billes double rangée comportant

un axe (1)
un manchon (2) autour dudit axe (1);
un premier jeu (5) et un deuxième jeu de billes:
un anneau (6, 10) en surface duquel une cage (7, 11) est formée pour le deuxième jeu de billes (9);

dans lequel le premier jeu de billes (5) roule entre une cage d'axe (3) formée dans une surface extérieure dudit axe et une cage à billes extérieure (4,11a) associée avec ledit manchon (2), et;
une précharge est appliquée audit anneau qui est alors fixé de telle façon que ledit premier jeu et ledit deuxième jeu de billes sont installés en une position axiale appropriée;
caractérisé en ce
ladite cage d'axe (3) est formée dans une surface extérieure d'une portion de diamètre supérieur à celui dudit axe (1); et soit

(i) ledit anneau en précharge (6) est monté sur une portion de diamètre relativement inférieur (1a) dudit axe (1) de telle façon à former un anneau intérieur et comporte ladite cage (7) dudit deuxième jeu de billes (9) formé dans sa surface extérieure; soit

(ii) ledit deuxième jeu de billes (9) roule entre un autre anneau monté

sur une portion de surface de diamètre relativement inférieur (1a) dudit axe (1) et ladite cage (11) dudit anneau en précharge (10) qui est montée dans ledit manchon (2).

2. Le roulement à bille en double rangée tel que revendiqué à la revendication 1 dont:

ladite cage extérieure à billes (4) dudit premier jeu de billes et une cage extérieure à billes (8) pour ledit deuxième jet de billes (9) sont formées toutes deux directement dans une surface intérieure dudit manchon (2).

3. Le roulement à bille en double rangée tel que revendiqué à la revendication 1 dont:

ladite cage à billes extérieure (4) dudit premier jeu de billes (5) est formée directement dans une surface intérieure dudit manchon (2); et une cage à billes extérieure (11) dudit deuxième jeu de billes (9) est formé directement dans une surface intérieure d'un anneau extérieur (10) montée dans ledit manchon (2).

4. Le roulement à bille en double rangée tel que revendiqué à la revendication 1 dont:

une cage à billes (8) du deuxième jeu de billes (9) est formée directement dans une surface intérieure dudit manchon (2); et une cage à billes extérieure (11a) dudit premier jeu de billes (5) est formé dans une surface intérieure d'un anneau extérieur (13) monté dans ledit manchon (2).

EP 0 591 587 B1

# FIG. 1

# FIG. 2

# FIG. 3

# FIG. 4

# FIG. 5